(19) Europäisches Patentamt
European Patent Office
Office européen des brevets

(11) **EP 2 071 523 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(51) Int Cl.:
***G07C 9/00*** *(2006.01)*

(21) Anmeldenummer: **08162197.1**

(22) Anmeldetag: **12.08.2008**

(54) **Verfahren zum Freigeben eines Funkschlosses**

Method for releasing a radio lock

Procédé de libération d'un verrou à transpondeur

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.12.2007 DE 102007058367**

(43) Veröffentlichungstag der Anmeldung:
**17.06.2009 Patentblatt 2009/25**

(73) Patentinhaber: **Faciliteam AG**
**97297 Waldbüttelbrunn (DE)**

(72) Erfinder: **Scheuermann, Carl H.**
**97072, Würzburg (DE)**

(74) Vertreter: **Lohr, Georg**
**Lohr, Jöstingmeier & Partner**
**Patent- und Rechtsanwälte**
**Junkersstrasse 3**
**82178 Puchheim (DE)**

(56) Entgegenhaltungen:
**EP-A- 0 276 113     EP-A- 1 041 224**
**EP-A- 2 031 566     DE-A1- 10 010 436**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Freigeben eines von mindestens zwei Funkschlössern einer Schließanlage durch einen für mindestens zwei der Funkschlösser berechtigten aktiven Funkschlüssel nach dem Oberbegriff des Anspruchs 1 sowie ein Funkschloss nach dem Oberbegriff des Anspruchs 6.

Eine Schließanlage aus Funkschlössern und Funkschlüsseln ermöglicht eine berührungslose Kommunikation zwischen den Funkschlüsseln und den Funkschlössern und damit eine berührungslose Berechtigungsprüfung. Dabei sind zwei verschiedene Funktionsweisen bekannt: Nach der ersten ist der Funkschlüssel ein passiver Transponder, der vor ein Funkschloss gehalten und dann von diesem ausgelesen wird. Dabei beträgt der Abstand zwischen dem Funkschlüssel und dem Funkschloss in der Regel nur wenige cm (ca. 0 - 50cm). Alternativ kann der Funkschlüssel einen aktiven Sender haben, der nach Betätigung eines Tasters ein Signal sendet, welches von allen Funkschlössern im Sendebereich von üblicherweise einigen Metern (etwa 0,5m - 50m) empfangen und ausgewertet wird. Dieser Typ wird als aktiver Funkschlüssel bezeichnet. Dieses System-hat den Vorteil, dass schon bei einer Annäherung an das Funkschloss der Funkschlüssel betätigt und das Funkschloss freigegeben werden kann. Befinden sich jedoch mehrere Funkschlösser, für die der Funkschlüssel berechtigt ist, im Sendebereich des Funkschlüssels, so werden alle Schlösser freigegeben. Dies hat den Nachteil, dass dann auch unberechtigte Personen Zugang zu ansonsten verschlossenen Räumen haben. Zur Lösung dieses Problems schlägt die DE 10 2006 010 436 A1 vor, dass die Funkschlösser ein Signal an den Funkschlüssel senden, letzterer die Empfangspegel der Funkschlösser ermittelt und danach mit dem Funkschloss kommuniziert, dessen Signal er mit dem größten Empfangspegel empfängt. Die Signale der Funkschlösser werden an vorgegebenen Zeitpunkten oder kontinuierlich ausgesendet. Bei batteriegespeisten Funkschlössern wird dadurch das Batteriewechselintervall entsprechend verkürzt.

EP-A2-1 041 224 adressiert das Problem, dass Funkschlösser nicht öffnen, wenn sie gleichzeitig von mehreren Schlüsseln ein durch eine Reizsequenz initiiertes Antwortsignal erhalten und schlägt vor, dass jeder der Funkschlüssel die Feldstärke einer von ihm empfangenen Reizsequenz feststellt und dass nur derjenige der Funkschlüssel zur Aussendung eines Freigabesignals aufgefordert wird, der die größte Empfangsfeldstärke festgestellt hat.

EP-A2-0 276 113 offenbart ein Verfahren zur Kommunikation eines Funkschlosses mit einem passiven Transponders. Das Funkschloss hat zwei NAND Gatter G1 und G2. Gatter G1 initialisiert eine Kontrollschaltung und Gatter G2 setzt die Kontrollschaltung nach einer Zeitspanne, die größer ist als die Zeitspanne, welche zur Übermittlung eines Schlüsselcodes notwendig ist, zurück. Die Zeit zwischen einem Reset durch das Gatter G2 und dem nächsten Initialisierungsimpuls durch das Gatter G1 hängt von der magnetischen Feldstärke und somit von dem Abstand des passiven Transponders und der Übertragungsspule des Funkschlosses ab.

Der Erfindung liegt die Aufgabe zu Grunde ein verbessertes Verfahren zum Öffnen eines Funkschlosses mit einem Funkschlüssel sowie ein entsprechendes Funkschloss anzugeben.

Die Aufgabe ist durch ein Verfahren nach dem Anspruch 1 bzw. durch ein Funkschloss nach Anspruch 6 gelöst.

Die nachveröffentlichte EP-A1-2 031 566 zeigt ein Verfahren nach dem Oberbegriff des Anspruchs 1.

Nach der Erfindung sendet der Funkschlüssel ein Signal, welches alle Funkschlösser im Sendebereich empfangen. Das Signal kann z.B. eine Schlüsselkennung beinhalten. Jedes der Funkschlösser bestimmt ein Maß für die Feldstärke des von ihm empfangenen Signals, d.h. eine Norm der Empfangsfeldstärke $\|\vec{E}\|$. Je größer dieses Maß $\|\vec{E}\|$ ist, desto geringer ist die Entfernung x zwischen dem Funkschlüssel und dem entsprechenden Funkschloss ($x \propto \vec{E}^{-1/2}$). Anschließend bestimmt jedes der Funkschlösser in Abhängigkeit von dem Maß $\|\vec{E}\|$ für die Empfangfeldstärke und der Häufigkeit das jeweilige Funkschloss in der Vergangenheit von dem Funkschlüssel eine Freigabesignal erhalten eine Wartezeit $t$, nach deren Verstreichen es eine Kennung an den Funkschlüssel sendet. Anhand der Wartezeit $t$ wählt der Funkschlüssel ein Funkschloss aus und sendet ein Freigabesignal an das ausgewählte Funkschloss. Betätigt der Funkschlüsselinhaber den Funkschlüssel, wird durch das Verfahren nach der Erfindung nur genau ein Funkschloss freigegeben.

Bevorzugt nimmt die Wartezeit $t$ mit größer werdendem Maß $\|\vec{E}\|$ ab. Der Funkschlüssel sendet dann das Freigabesignal bevorzugt an das Funkschloss dessen Kennung er als erstes empfängt. Dieses Funkschloss ist dann das räumlich dem Funkschlüssel nächste Funkschloss.

Beispielsweise kann die Wartezeit nach Schritt b des Verfahrens nach Anspruch 1 anhand einer monoton fallenden oder einer monoton steigenden Abbildung des Maßes $\|\vec{E}\|$ für die Feldstärke bestimmt werden, d.h.

$$\|\vec{E}\| \xrightarrow{\;A\;} t$$

mit $A(\|\vec{E}_1\|) \geq A(\|\vec{E}_2\|)$ für alle $\|\vec{E}_1\| > \|\vec{E}_2\|$ (monoton steigend) oder $A(\|\vec{E}_1\|) \leq A(\|\vec{E}_2\|)$ für alle $\|\vec{E}_1\| > \|\vec{E}_2\|$ (monoton fallend) . Wenn zum Beispiel die Wartezeit anhand einer streng monoton fallenden Abbildung ($A(\|\vec{E}_1\|) < A(\|\vec{E}_2\|)$ für alle $\|\vec{E}_1\| > \|\vec{E}_2\|$) ermittelt wird, und der Funkschlüssel nach Empfang der als erstes gesendeten Kennung das Freigabesignal an das Funkschloss mit dieser Kennung sendet, so wird das Funkschloss freigegeben, welches dem Funkschlüssel am nächsten ist. Alternativ kann die Wartezeit durch eine streng monoton steigende Abbildung ($A(\|\vec{E}_1\|) > A(\|\vec{E}_2\|)$ für alle $\|\vec{E}_1\| > \|\vec{E}_2\|$) ermittelt werden. Nun wird durch Senden des Freigabesignals an das Funkschloss, dessen Kennung der Funkschlüssel als letztes empfangen hat, das dem Funkschlüssel räumlich nächste Funkschloss geöffnet.

Für die Wartezeit $t$ nach Schritt b des Verfahrens nach Anspruch 1 kann beispielsweise gelten: $t = t_0 + c*(\|\vec{E}\|-k)^{-n}$, wobei $t_0$ eine Standartwartezeit ist, $c$, $k$ und $n$ reelle Konstanten sind.

Die Standartwartezeit kann durch einen Zufallsgenerator bei jeder Bestimmung der Wartezeit neu generiert werden. Bestimmen zwei Funkschlössern die gleiche Feldstärke, senden Sie trotzdem ihre Kennungen nicht gleichzeitig und der Funkschlüssel kann an eines der beiden Funkschlösser ein Freigabesignal senden.

Nachfolgend wird der Einfachheit halber angenommen, dass $c > 0$ und $n > 0$ und dass der Funkschlüssel das Freigabesignal dem Funkschloss sendet, dessen Kennung er als erstes empfängt.

Wenn dann das von einem Funkschloss bestimmte Maß $\|\vec{E}\|$ größer als ein vorbestimmter Wert $\|\vec{E}_{max}\|$ ist, dann kann bei der Bestimmung der Wartezeit $t$ anstelle der ansonsten verwendeten Konstanten $c$ einen Wert $c_1$, z.B. $c_1 = 0$ (wenn ansonsten $c > 0, n > 0$) und/oder anstelle der Standartwartezeit $t_0$ eine Wartezeit $t_1$ mit $t_1 < t_0$' insbesondere $t_1 = 0$, verwendet werden. Dadurch kann sichergestellt werden, dass wenn die Entfernung $x$ zwischen dem Funkschlüssel und einem der Funkschlösser so klein ist, dass der vorbestimmte Wert $\|\vec{E}_{max}\|$ überschritten wird in jedem Fall dieses Funkschloss freigegeben wird. Dieser vorbestimmte Wert $\|\vec{E}_{max}\|$ entspricht vorzugsweise einer Entfernung $x_{min}$ zwischen Funkschlüssel und Funkschloss bei der davon ausgegangen werden kann, dass kein anderes Funkschloss näher an dem Funkschlüssel ist. Sind die Funkschlösser z.B. in Türen, die von einem Flur abgehen eingebaut, dann gibt es einen Mindestabstand zwischen zwei Funkschlössern, der durch die Position der Funkschlösser in der Tür und den baulichen Gegebenheiten wie der Stärke der Wand zwischen den zwei benachbarten Türen, den verwendeten Zargen etc. bestimmt ist. Insbesondere dann kann der vorbestimmte Wert $\|\vec{E}_{max}\|$ einer Entfernung $x_{min}$ zwischen Funkschlüssel und Funkschloss entsprechen, die kleiner als der halbe bauliche Mindestabstand zwischen zwei Funkschlössern ist.

Neben dem Maß $\|\vec{E}\|$ berücksichtigen die Funkschlösser bei der Bestimmung der Wartezeit nach der sie ihre jeweiligen Kennungen senden auch mit welcher Häufigkeit das jeweilige Funkschloss in der Vergangenheit von dem Funkschlüssel eine Freigabesignal erhalten hat. Insbesondere kann die Wartezeit nach der ein Funkschloss seine Kennung sendet, verkürzt werden, wenn dieses Funkschloss in der Vergangenheit häufig von dem Funkschlüssel der das Signal gesendet hat freigegeben wurde. Vorzugsweise bestimmen die Funkschlösser der Schließanlage eine Wahrscheinlichkeit ihrer jeweiligen Freigabe durch einen bestimmten Schlüssel. Ist die Wahrscheinlichkeit, dass ein Funkschloss durch einen Funkschlüssel freigegeben werden soll höher als ein vorbestimmter Wert, und empfängt das Funkschloss ein Signal von diesem Schlüssel, dann bestimmt es eine verkürzte Wartezeit und sendet nach deren verstreichen seine Kennung. Beispielsweise kann die Konstante $c_1$ eine monoton fallende Abbildung der Wahrscheinlichkeit der Freigabe des Funkschlosses durch den Funkschlüssel sein. Dadurch wird ein Funkschloss, welches regelmäßig von einem Funkschlüssel freigegeben wird, also mit großer Wahrscheinlichkeit freigegen werden soll, bevorzugt freigegeben. Dies ist beispielsweise dann vorteilhaft, wenn z.B. zwei Bürotüren mit je einem Funkschloss eng nebeneinander liegen und eine der beiden Bürotüren die zum Büro des Inhabers des Funkschlüssels ist. Die Bürotür des Funkschlüsselinhabers wird häufiger von dem Funkschlüssel freigegeben als die benachbarte Bürotür. Entsprechend ist die Wahrscheinlichkeit, dass dieses Funkschloss durch diesen Funkschlüssel freigegeben wird und zukünftig freigegeben werden soll größer als die Wahrscheinlichkeit einer Freigabe der benachbarten Bürotür durch den Inhaber des Funkschlüssels. Entsprechend bestimmt das Funkschloss eine verkürzte Wartezeit, nach deren verstreichen es seine Kennung an den Funkschlüssel sendet. In der Folge sendet der Funkschlüssel das Freigabesignal an dieses Funkschloss, selbst wenn es nicht das räumlich nächste ist. Dazu kann die Konstante $c_1$ bei einer großen Freigabewahrscheinlichkeit betragsmäßig kleiner als $c$ gewählt werden ($c_1 < c$, insbesondere kann $c_1$ etwa Null sein, z.B. $c_1 = 0$). Dabei ist allerdings sicherzustellen, dass der Funkschlüssel trotzdem auch das benachbarte Funkschloss öffnen kann. Dies kann z.B. dadurch erfolgen, dass dann, wenn das von einem Funkschloss bestimmte Maß $\|\vec{E}\|$ größer als ein vorbestimmter Wert $\|\vec{E}_{max}\|$ ist, der z.B. dem halben baulichen Mindestabstand zwischen zwei Funkschlössern entspricht, das Funkschloss seine Kennung unmittelbar sendet, d.h. $t=0$. Es genügt auch wenn $t_0$ durch ein $t_1$ mit $t_1 < t_0$ ersetzt und $c$ durch $c_1$ mit $c_1 = 0$ ersetzt wird.

Ein Ausgangswert für ein geeignetes Maß $\|\vec{E}\|$ ist z.B. der sogenannte RSSI-Wert (Received Signal Strength Indicator), der von den meisten am Markt verfügbaren Empfangchips standartmäßig in $dBm$ ($0 dBm = 1 mW$) bestimmt wird. Es genügt dann das Vorzeichenbit des RSSI zu verändern und man kann den so erhaltenen "Leistungswert" ggf. plus einer Standartwartezeit als Wartezeit verwenden. Dann gilt $t = t_0 + c \cdot (10^{RSSI})^{-1} = t_0 + c \cdot (10^{-RSSI})$, wobei $t_0$ in $s$, $c$ in $s / mW$ und $RSSI$ in $dBm$. Ist der ermittelte RSSI z.B. 11dBm, dann würde dieser durch den Vorzeichenwechsel zu -11dBm, was $10^{-11} mW$ entspricht. Die Wartezeit $t$ ist dann $10^{-11}$ s (bei $t_0 = 0$, $c = s/mW$). In diesem Fall sendet der Funkschlüssel das Freigabesignal an das Funkschloss, von dem er als erstes die Kennung empfängt.

Die Figuren zeigen:

Fig. 1: Ein Beispiel für die Wartezeit *t*

Fig. 2: Ein weiteres Beispiel für die Wartezeit *t*

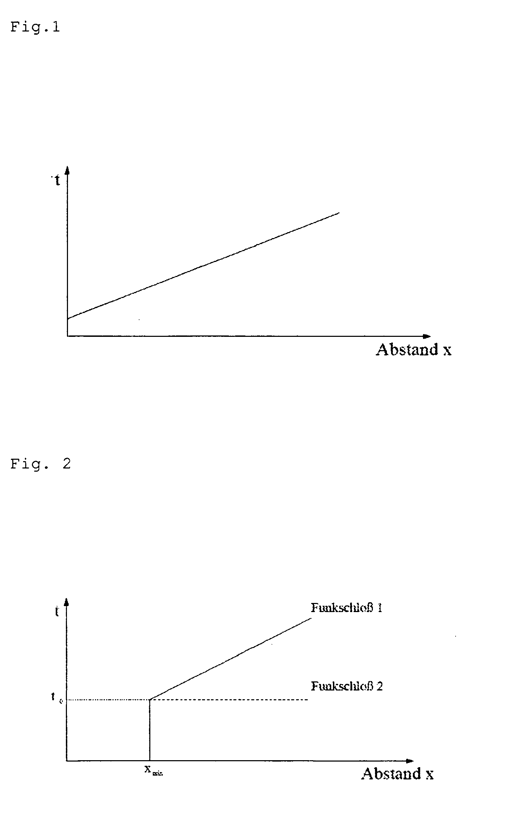

Figur 1 zeigt ein Beispiel für eine Wartezeit, die eine Funktion des Abstandes ist. Empfangen zwei Funkschlösser ein Signal von einem Funkschlüsseln dann bestimmen beide zunächst den RSSI. Je kürzer die Entfernung *x* zwischen dem Funkschloss und dem Funkschlüssel, desto größer ist der RSSI. In der Figur 1 nimmt die Wartezeit *t* mit dem Abstand zu. Entsprechend würde der Funkschlüssel das Funkschloss auswählen, dessen Kennung er als erstes empfangen hat. An dieses sendet er ein Freigabesignal.

Figur 2 zeigt die Wartezeiten *t* zweier verschiedener Funkschlösser einer Schließanlage für einen bestimmten Funkschlüssel. Bei dieser Ausführungsform berücksichtigen die Funkschlösser neben dem Maß $\|\vec{E}\|$ für die Eingangsfeldstärke auch die Wahrscheinlichkeit ihrer jeweiligen Freigabe durch den jeweiligen Funkschlüssel. Die Wartezeit des ersten Schlosses ist durch eine durchgezogene Linie dargestellt. Die Freigabehäufigkeit, und damit auch die Freigabewahrscheinlichkeit, dieses Funkschlosses durch den Funkschlüssel ist gering. Ist der Funkschlüssel sehr nahe ($x < x_{min}$) an dem ersten Funkschloss dann sendet das Funkschloss seine Kennung unmittelbar nach Empfang des Signals des Funkschlüssels an den Funkschlüssel, d.h. die Wartezeit ist Null ($t = 0$). Ist der Funkschlüssel von dem Funkschloss weiter als $x_{min}$ ($x > x_{min}$) entfernt, dann bestimmt das Funkschloss die Wartezeit analog zu Fig. 1. Die Wartezeit des zweiten Funkschloss ist durch eine gestrichelte Linie dargestellt. (Die gepunktete Linie ist nur eine Hilfslinie). Die Freigabehäufigkeit, und damit auch die Freigabewahrscheinlichkeit, dieses Funkschlosses durch den Funkschlüssel ist hoch. Auch hier sendet das zweite Funkschloss seine Kennung unmittelbar, wenn der Funkschlüssel sehr nahe ($x < x_{min}$) dem Funkschloss ist. Ist der Funkschlüssel jedoch weiter als $x_{min}$ von dem zweiten Funkschloss entfernt, dann beträgt die Wartezeit *t* konstant $t_0$. Folglich wird immer das zweite Funkschloss freigegeben, es sei denn der Abstand zwischen dem Funkschlüssel und dem ersten Funkschloss ist kleiner als $x_{min}$. $x_{min}$ ist so gewählt, dass es etwas kleiner als der halbe minimale bauliche Abstand zwischen den beiden Funkschlösser ist.

**Patentansprüche**

1. Verfahren zum Freigeben eines von mindestens zwei Funkschlössern einer Schließanlage durch einen für mindestens zwei der Funkschlösser berechtigten aktiven Funkschlüssel, mit den Schritten:

   a. der Funkschlüssel sendet ein Signal an die Funkschlösser,

   b. die Funkschlösser empfangen das Signal, jedes der Funkschlösser bestimmt ein Maß $(\|\vec{E}\|)$ für die Feldstärke $(\vec{E})$ des von ihm empfangenen Signals und in Abhängigkeit von dem Maß $(\|\vec{E}\|)$ eine Wartezeit (*t*), nach deren verstreichen es eine Kennung an den Funkschlüssel sendet,

   c. der Funkschlüssel wählt anhand der Wartezeit (*t*) ein Funkschloß und sendet ein Freigabesignal an dieses,

   **dadurch gekennzeichnet, dass**

   d. neben dem Maß $(\|\vec{E}\|)$ bei der Bestimmung der Wartezeit (*t*) berücksichtigt wird, mit welcher Häufigkeit das jeweilige Funkschloss in der Vergangenheit von dem Funkschlüssel ein Freigabesignal erhalten hat.

2. Verfahren nach Anspruch 1,
   **dadurch gekennzeichnet, dass**
   die Bestimmung der Wartezeit (*t*) mittels einer monoton fallenden oder monoton steigenden Abbildung

   (A) des Maßes $(\|\vec{E}\|)$ erfolgt, d.h. $\left\|\vec{E}\right\| \xrightarrow{A} t$ mit

   $A(\|\vec{E_1}\|) \geq A(\|\vec{E_2}\|)$ für alle $\|\vec{E_1}\|, > \|\vec{E_2}\|$ oder $A(\|\vec{E_1}\|) \leq A(\|\vec{E}\|)$ für alle $\|\vec{E_1}\| > \|\vec{E_2}\|$.

3. Verfahren nach einem der Ansprüche 1 oder 2, **dadurch gekennzeichnet, dass** für die Wartezeit t in Schritt (b) gilt:

$$t = t_0 + c * \left(\left\|\vec{E}\right\| - k\right)^{-n},$$

   wobei $t_0$ eine Standardwartezeit ist, c, k und n reelle Konstanten sind, wobei wenn das von einem Funkschloss bestimmte Maß $(\|\vec{E}\|)$ größer als ein vorbestimmter Wert $(\|\vec{E}_{max}\|)$ ist, bei der Bestimmung der Wartezeit (*t*) anstelle der ansonsten verwendeten Konstanten c ein Wert c1 verwendet wird.

4. Verfahren nach einem der vorstehenden Ansprüche,
   **dadurch gekennzeichnet, dass**
   zur Bestimmung des Maßes $(\|\vec{E}\|)$ der RSSI des empfangenen Signals verwendet wird.

5. Schließanlage mit mindestens zwei Funkschlössern und mindestens einem aktiven Funkschlüssel,
   **dadurch** gekennzeichet, dass
   zur Freigabe eines Funkschlosses durch den Funkschlüssel ein Verfahren nach einem der Ansprüche 1 bis 4 durchgeführt wird.

6. Funkschloss das nach Empfang eines Signals von einem aktiven Funkschlüssel ein Maß $(\|\vec{E}\|)$ für die Feldstärke $(\vec{E})$ des empfangenen Signals und in Abhängigkeit von dem Maß $(\|\vec{E}\|)$ eine Wartezeit (*t*) bestimmt, nach deren verstreichen es seine Kennung an den Funkschlüssel sendet,

**dadurch gekennzeichnet, dass**

das Funkschloss derart ausgebildet ist, dass es neben dem Maß ($\|\vec{E}\|$) bei der Bestimmung der Wartezeit ($t$) berücksichtigt, mit welcher Häufigkeit es in der Vergangenheit von dem Funkschlüssel ein Freigabesignal erhalten hat.

## Claims

1. Method for releasing one of at least two radio-controlled locks of a locking system with an active radio-control key authorized for at least two of the radio-controlled locks, comprising the steps:

   a. the radio-control key transmits a signal to the radio-controlled locks,
   b. the radio-controlled locks receive the signal, each of the radio-controlled locks determines a measure ($\|\vec{E}\|$) of the field strength ($\vec{E}$) of the signal received by it and, in dependence upon the measure ($\|\vec{E}\|$), a waiting period ($t$) after the expiry of which it transmits an identification to the radio-control key,
   c. the radio-control key selects, on basis of the waiting period ($t$), a radio-controlled lock and transmits to it a release signal, **characterized in that**
   d. beside the measure ($\|\vec{E}\|$), in the determination of the waiting period ($t$) account is taken of the frequency with which the radio-controlled lock concerned has in the past received a release signal from the radio-control key..

2. Method according to claim 1,
   **characterized in that**
   the determination of the waiting period ($t$) is effected by means of a monotonously decreasing or monotonously increasing mapping (A) of the measure ($\|\vec{E}\|$), i-e. $\left\|\vec{E}\right\| \xrightarrow{A} t$ with $A(\|\vec{E_1}\|) \geq A(\|\vec{E_2}\|)$ for all $\|\vec{E_1}\| > \|\vec{E_2}\|$ or $A(\|\vec{E_1}\|) \leq A(\|\vec{E_2}\|)$ for all $\|\vec{E_1}\| > \|\vec{E_2}\|$.

3. Method according to any one of claims 1 or 2,
   **characterized in that**
   for the waiting period in step (b)
   $t = t_0 + c*(\|\vec{E}\| - k)^{-n}$ applies,
   in which $t_0$ is a standard waiting period, c, k und n are real constants, and in which, when the measure ($\|\vec{E}\|$) determined by a radio-controlled lock is greater than a predetermined value ($\|\vec{E}_{max}\|$), a value c1 is used instead of the otherwise used constant c for the determination of the waiting period ($t$).

4. Method according to any one of the preceding claims,
   **characterized in that**

for determining the measure ($\|\vec{E}\|$), the RSSI of the received signal is used.

5. Locking system having at least two radio-controlled locks and at least one active radio-control key,
   **characterized in that**
   for releasing a radio-controlled lock with the radio-control key, a method according to any one of the claims 1 to 4 is used.

6. Radio-controlled lock which, after receiving a signal from an active radio-control key, determines a measure ($\|\vec{E}\|$) of the field strength ($\vec{E}$) of the received signal and, in dependence upon the measure ($\|\vec{E}\|$), a waiting period ($t$) after the expiry of which it transmits its identification to the radio-control key,
   **characterized in that**
   the radio-controlled lock is configured so that when determining the waiting period ($t$) it takes into account, in addition to the measure ($\|\vec{E}\|$), the frequency with which it has in the past received an release signal from the radio-control key.

## Revendications

1. Procédé de libération d'un au moins de deux verrous à transpondeur d'un système de fermeture par une clé à transpondeur active et autorisée pour au moins deux des verrous à transpondeurs, avec les étapes :

   a. la clé à transpondeur envoie un signal aux verrous à transpondeur,
   b. les verrous à transpondeur reçoivent le signal, chacun des verrous à transpondeur détermine une valeur ($\|\vec{E}\|$) pour l'intensité de champ ($\vec{E}$) du signal reçu par lui et, en fonction de la valeur ($\|\vec{E}\|$), un temps d'attente ($t$) après l'écoulement duquel il envoie un signal d'identification à la clé à transpondeur,
   c. la clé à transpondeur choisit, à partir du temps d'attente ($t$), un verrou à transpondeur et envoie un signal de libération à celui-ci,
   **caractérisé en ce que**,
   d. pour déterminer le temps d'attente ($t$), on tient compte, outre de la valeur ($\|\vec{E}\|$), de la fréquence à laquelle le verrou à transpondeur respectif a reçu de la clé à transpondeur un signal de libération de par le passé.

2. Procédé selon la revendication 1,
   **caractérisé en ce que**
   le temps d'attente ($t$) est déterminé moyennant une application (A) de la valeur ($\|\vec{E}\|$) qui est monotone décroissante ou monotone croissante, c.-à-d. $(\|\vec{E}\|) \xrightarrow{A} t$ avec $A(\|\vec{E_1}\|) \geq A(\|\vec{E_2}\|)$ pour tout $\|\vec{E_1}\| >$

$\|\vec{E_2}\|$ ou $A(\|\vec{E_1}\|) \le A(\|\vec{E_2}\|)$ pour tout $\|\vec{E_1}\| > \|\vec{E_2}\|$.

3. Procédé selon l'une quelconque des revendications 1 ou 2, **caractérisé en ce que**, pour le temps d'attente $t$ à l'étape (b) on a :

$$t = t_0 + c^* \, (\| \vec{E} \| - k)^{-n}$$

où $t_0$ est un temps d'attente standard, c, k et n sont des constantes réelles, où, si la valeur ($\|\vec{E}\|$) déterminée par un verrou à transpondeur est supérieure à une valeur prédéterminée ($\|\vec{E}_{max}\|$), on utilise, pour déterminer le temps d'attente ($t$), une valeur c1 en lieu et place des constantes c utilisées par ailleurs.

4. Procédé selon l'une quelconque des revendications précédentes, **caractérisé en ce que**, pour déterminer la valeur ($\|\vec{E}\|$), on utilise le RSSI du signal reçu.

5. Système de fermeture avec au moins deux verrous à transpondeur et avec au moins une clé à transpondeur active, **caractérisé en ce que** l'on met en oeuvre un procédé selon l'une quelconque des revendications 1 à 4 pour libérer un verrou à transpondeur grâce à la clé à transpondeur.

6. Verrou à transpondeur qui, après avoir reçu un signal d'une clé à transpondeur active, détermine une valeur ($\|\vec{E}\|$) pour l'intensité de champ (E) du signal reçu et, en fonction de la valeur ($\|\vec{E}\|$), un temps d'attente ($t$) après écoulement duquel il envoie son signal d'identification à la clé à transpondeur, **caractérisé en ce que**, pour déterminer le temps d'attente ($t$), le verrou à transpondeur est conçu de manière à tenir compte, outre de la valeur ($\|\vec{E}\|$), de la fréquence à laquelle le verrou à transpondeur respectif a reçu de la clé à transpondeur un signal de libération de par le passé.

Fig.1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006010436 A1
- EP 1041224 A2
- EP 0276113 A2
- EP 2031566 A1